# EUROPÄISCHE PATENTSCHRIFT

(11) **EP 0 574 775 B1**
(45) Veröffentlichungstag und Bekanntmachung des Hinweises auf die Patenterteilung: **02.09.1998**
(21) Anmeldenummer: 93108997.3
(22) Anmeldetag: 04.06.1993
(51) Int. Cl.: C08G 18/08, C09D 175/14, C08G 18/67

(54) **Reaktive, wasseremulgierbare Bindemittel und ihre Verwendung zur Herstellung von Lacken**
Reactive, water-emulsifiable binders and their use in the preparation of lacquers
Liants réactifs émulsifiables dans l'eau et leur utilisation pour la préparation de lacques

(30) Priorität: 17.06.1992 DE 4219767
(43) Veröffentlichungstag der Anmeldung: 22.12.1993
(73) Patentinhaber: Wolff Walsrode Aktiengesellschaft, D-29655 Walsrode (DE)
(72) Erfinder: Kressdorf, Burkhard, Dr., W-3030 Walsrode (DE); Dannhorn, Wolfgang, Dr., W-3032 Fallingbostel (DE); Lühmann, Erhard, Dipl.-Ing., W-3036 Bomlitz 1 (DE); Hoppe, Lutz, Dr., W-3030 Walsrode (DE)
(74) Vertreter: Braun, Rolf, Dr.

(56) Entgegenhaltungen:
- EP-A- 0 084 312
- EP-A- 0 356 848
- EP-A- 0 451 590
- US-A- 4 760 111

## Beschreibung

Die Erfindung betrifft neue wasseremulgierbare Polyesterharze, ein Verfahren zu ihrer Herstellung und ihre Verwendung als Lackrohstoff.

Wäßrige Systeme auf Basis ungesättigter, allylgruppenhaltiger Polyester sind bekannt aus DE-OS 3 441 154, DE-OS 2 905 666, DE-OS 2 804 216, DE-OS 3 218 200. Nach der Trocknung können die Polyester durch energiereiche Strahlung oder auch peroxidisch gehärtet werden. Allerdings sind die Härtungszeiten für die technische Anwendung, z.B. der Möbel lackierung, zu lang.

In der DE-OS 3 935 495 werden modifizierte, ungesättigte Polyester beschrieben, die schneller aushärten. Die Modifikation wird durch Umsetzen dieser Polyester mit Isocyanaten erreicht. Es werden höherviskose Produkte erhalten, die zwar verbesserte, aber noch nicht ausreichende Hartungsgeschwindigkeiten besitzen.

Mit Isocyanat vernetzte, ungesättigte Polyester, wie sie in der DE-OS 4 011 349 beschrieben sind, können ohne Zusatz von Hilfsmitteln emulgiert werden und zeichnen sich nach der Härtung durch gute Lackeigenschaften, insbesondere große Harte, gute Porenzeichnung auf Holz, verringertes Eindringen in Holz sowie gute Haftfestigkeit auf unterschiedlichen Substraten, aus. Jedoch entsprechen auch bei diesen Systemen die Aushärtungszeiten nicht den hohen Anforderungen der Technik (siehe Vergleichsbeispiel V 1).

Lackbindemittel mit reaktiven, olefinischen Doppelbindungen sind solche, die Acryloyl- undloder Methacryloylgruppen und/oder Derivate davon enthalten. Eine Vielzahl dieser Systeme, die in der Patentliteratur beschrieben sind, lassen sich in Wasser emulgieren, allerdings nur in Anwesenheit von Hilfsmitteln. Hauptsachlich finden Neutralisationsmittel, wie Alkali- oder Erdalkalihydroxide, Verwendung (vergl. US-PS 4 033 920). Dispersionen dieser Art haben den Nachteil, daß die Neutralisationsmittel die Verseifung der Esterbindungen in den Bindemitteln beschleunigen. Außerdem verbleibt ein Großteil der Neutralisationsmittel im Lack, wodurch dessen Wasserfestigkeit abnimmt.

Die DE-OS 2 853 921 beschreibt polymerisierbare Bindemitteldispersionen, die aus Wasser, einem polymerisierbaren Präpolymeren, einem externen Dispergierhilfsmittel - Polyvinylpyrrolidon und/oder Vinylpyrrolidon/Vinylester-Copolymer - und einem Photoinitiator bestehen.

Die Herstellung der Dispersion erfolgt in Gegenwart organischer Lösungsmittel, welche anschließend über einen aufwendigen Destillationsprozeß abgetrennt werden müssen. Ein weiterer Nachteil schutzkolloidenthaltender Dispersionen liegt darin, daß viele Dispergatoren nach Verdunsten des Wassers koagulieren und nicht mehr reemulgierbar sind. Sind beispielsweise Lackauftragsmaschinen mit eingetrockneten Lackresten behaftet, so können diese nur noch mit organischen Solventien in Lösung gebracht werden. Der Einsatz von organischen Lösungsmitteln bewirkt aber einen zusätzlichen Mehraufwand an Reinigungs- und Entsorgungskosten. Schließlich wird die Wasserfestigkeit der ausgehärteten Lacke herabgesetzt, da die Schutzkolloide nicht in den Lackfilm eingebaut werden.

Die EP 0 084 312 betrifft strahlenhärtbare, wäßrige Bindemittelemulsionen, die ohne Zusatz von Hilfsmitteln in Wasser emulgiert werden können. Zur Herstellung der Emulsionen werden Acrylatpräpolymere mit Emulgatorpolyester und Photoinitiatoren vermischt und anschließend in Wasser emulgiert. Solche Emulsionen sind zwar bei Raumtemperatur über einen längeren Zeitraum hinweg lagerstabil, bei höheren Temperaturen (40°C) tritt jedoch nach wenigen Tagen Phasentrennung auf. Die getrennten Phasen lassen sich nicht mehr, z.B. durch Rühren oder Schütteln, in eine Emulsion überführen. Getrocknete, aber noch nicht gehärtete Produkte der beschriebenen Art lassen sich zwar reemulgieren, es bilden sich aber größere Teilchenagglomerate aus. Eingetrocknetes Bindemittel ist deshalb nicht recyclebar. Schließlich bewirkt die Verdünnung der Acrylat- bzw. Methacrylatkonzentration durch den Emulgatorpolyester einen markanten Reaktivitatsverlust bei der Aushärtung im Vergleich zu den später beschriebenen erfindungsgemäßen Lackbindemitteln (siehe Vergleichsbeispiel V 2). Es lassen sich weiterhin keine allylgruppenhaltigen Polyester, auch solche nicht, die nach bekannten Verfahren stabilisiert sind, als Emulgatorpolyester einsetzen, da diese die frühzeitige Vergelung der Bindemittel auslösen.

Aufgabe der vorliegenden Erfindung war es, polymerisierbare, reaktivverdünnerfreie Lackbindemittel zur Verfüguing zu stellen, die sich durch schnelles Aushärten - wie von der Technik gefordert - auszeichnen und sich ohne Mitverwendung externer Emulgatoren und Lösungsmittel in Wasser emulgieren lassen. Nach der Hartung, die sowohl peroxidisch als auch strahlenchemisch erfolgen kann, sollten Lackfilme erhalten werden, die sehr gute Lackeigenschaften, wie verbesserte Harte, gutes Standvermögen, blasenfreie Oberfläche, gute Porenzeichnung auf Holz, geringes Eindringen in Holz und gute Haftfestigkeit auf unterschiedlichen Substraten aufweisen.

Überraschenderweise ließen sich die gestellten Aufgaben mit den nachfolgend näher beschriebenen Lackbindemitteln lösen. Zur Herstellung der erfindungsgemäßen Lackbindemittel werden vorab (meth)acryloylgruppenhaltige Prapolymere mit ungesättigten, wasseremulgierbaren Polyestern vermischt und anschließend mit Polyisocyanaten umgesetzt.

Charakteristisch für den Vernetzungsschritt ist, daß die Reaktion der Polyisocyanate mit den Acrylatpräpolymeren und den ungesättigten Polyestern über reaktive Gruppen, wie z.B. OH, NH und/oder COOH, vorzugsweise OH, erfolgen kann. Um erfindungsgemäße Lackbindemittel zu erhalten, muß pro Mol Präpolymer und/oder Präpolymer-Mischung mindestens 1 Mol reaktive Gruppen vorhanden sein. Nach der Umsetzung können die (meth)acryloylgruppenhaltigen Präpolymeren je nach Art der funktionellen Gruppen über Urethan-, Biuret-, Säureamid-, Allophanat- undloder Harnstoff Harnstoff-Struktureinheiten mit den Emulgatorpolyestern verbunden sein. Weiterhin erfindungsgemäß ist, daß zur Umsetzung weder die Präpolymer-Mischung, noch das Polyisocyanat in verdünnter Form vorliegen müssen.

Gegenstand der Erfindung sind Lackbindemittel, erhalten durch Umsetzung von:
A) 20 - 80 Gew.-%, vorzugsweise 35 - 65 Gew.-%, einem oder mehreren (meth)acryloylgruppenhaltigen Präpolymeren,
B) 80 - 20 Gew.-%, vorzugsweise 65 - 35 Gew.-%, einem oder gegebenenfalls mehreren ungesättigten, wasseremulgierbaren Polyestern als Emulgatorpolyester mit
C) 0,1 - 20 Gew.-%, vorzugsweise 0,2 - 10 Gew.-%, einem oder mehreren Polyisocyanaten.

Die Summe der Prozentgehalte aus A, B und C ist 100.

Gegenstand der Erfindung ist auch die Verwendung der Umsetzungsprodukte aus (meth)acryloylgruppenhaltigen Präpolymeren A, wasseremulgierbaren Polyestern B und Polyisocyanaten C zur Herstellung von Emulsionen.

Ein weiterer Gegenstand der Erfindung ist die Verwendung der erfindungsgemäßen Polymere als Lackrohstoffe.

Die erfindungsgemäßen Umsetzungsprodukte aus (meth)acryloylgruppenhaltigen Präpolymeren A, ungesättigten Polyestern B und Polyisocyanaten C lassen sich in Wasser ohne Zusatz von Emulgatoren emulgieren und zeichnen sich nach der Trocknung durch schnelles Härten mit UV-Licht aus. Überraschenderweise wurde gefunden, daß die erfindungsgemäßen Umsetzungsprodukte erheblich schneller härten als nur die Gemische aus Acrylatpräpolymer A und ungesättigten Polyestern B (siehe Vergleichsbeispiel V 2).

Überraschend war, daß allylethergruppenhaltige Polyester als Emulgatorpolyester B geeignet sind. Umsetzungsprodukte, die solche Polyester enthalten, lassen sich emulgieren. Die Emulsionen sind lagerstabil und vergelen nicht. Dagegen tritt bei Mischungen aus allylethergruppenhaltigen Polyestern und Acrylatpräpolymeren, die nicht mit Polyisocyanaten umgesetzt wurden, bereits nach kurzer Zeit Vergelung ein (siehe Vergleichsbeispiel V 2).

Überraschend war weiterhin, daß eingetrocknete Emulsionen recyclebar sind, d.h. getrocknetes aber noch nicht gehärtetes Lackbindemittel läßt sich vollständig mit Wasser zu einer agglomeratfreien Emulsion reemulgieren und z.B. der Emulsionsherstellung wieder zusetzen.

Bei den (meth)acryloylgruppenhaltigen Präpolymeren A handelt es sich um Produkte mit reaktiven, olefinischen Doppelbindungen, die sich von der Methacrylsäure oder Acrylsäure ableiten. Geeignete Präpolymere mit (Meth)acryloylgruppen sind z.B. Polyester, Polyether, Polyetherpolyester, Polyesteramide, Polyepoxide, Polyole, Polyesterurethane, Polyetherurethane, Polyetheresterurethane, Polyvinylverbindungen und andere.

Die Herstellung solcher Prapolymere werden in den US-PS 2 101 107, 2 413 973, 2 951 758, 3 066 112, 3 301 743, 3 368 900, 3 380 831, 3 455 801, 3 469 982, 3 485 732, 3 530 100, 3 551 246, 3 552 986, 3 628 963, 3 660 145, 3 664 861, 3 689 310, 3 719 521, 3 732 107, 3 782 961, 3 840 369, 3 888 830, 4 033 920, 4 206 025, GB-PS 1 006 587, 1 241 823, 1 241 824, 1 321 372, sowie DE-OS 1 916 499 und 2 853 921 beschrieben.

Als besonders geeignete (meth)acryloylgruppenhaltige Prapolymere A sind Polyesteracrylate zu nennen. Besonders bevorzugte Polyesteracrylate sind Kondensationsprodukte aus aliphatischen und/oder aromatischen Dicarbonsäuren bzw., falls zugänglich, deren Anhydride, mehrwertigen Polyolen und α,β-ungesättigten Monocarbonsäurederivaten.

Als Dicarbonsäurekomponenten kommen beispielsweise in Frage: Malonsäure, Bernsteinsäure, Glutarsäure, Adipinsäure, Sebacinsäure, Hexahydrophthalsäure, Terephthalsäure, Maleinsäure, Chlormaleinsäure, Fumarsäure, Citraconsäure, Itaconsäure oder die Anhydride der genannten Dicarbonsäure, sofern sie herstellbar sind.

Geeignete mehrwertige Alkohole sind Ethylenglykol, Propan-1,2-diol, Propan-1,3-diol, Diethylenglykol, Dipropylenglykol, Butan-1,3-diol, Butan-1,4-diol, Neopentylglykol, Hexan-1,6-diol, bis-alkoxyliertes Bisphenol A, Perhydrobisphenol A, Cyclohexan-1,4-dimethanol, Glycerin, Trimethylolpropan, Trimethylolethan, Pentaerythritsorbit, Di-trimethylolpropan und Di-pentaerythrit.

Methacrylsäure, Acrylsäure, Methacryloylchlorid, Acryloylchlorid, Methacrylsäurehydroxyalkylester, Acrylsäurehydroxyalkylester, 2-Methylacrylsäure-(2-isocyanatethylester), Acrylsäure-(1,2-dimethyl-3-isocyanatpropylester), Methacryloylisocyanat und Acryloylisocyanat sind die bevorzugten Derivate α,β-ungesättigter Monocarbonsäuren. Die Herstellung der Polyesteracrylate erfolgt nach den üblichen Methoden in einem Schritt oder stufenweise (in UV and EB Curing Formulations for Printing Inks, Coatings and Paints, R. Holman, P. Oldring (ed.), SITA - Technology, 203 Gardner House, Broomhill Road, London SW 18, England, 1988).

Als Emulgatorpolyester B kommen alle ungesättigten Polyester in Frage, die ohne Emulgatoren in Wasser dispergierbar sind. Besonders bevorzugte ungesättigte Polyester enthalten zusätzlich Allylethergruppen. Ihre Herstellung ist bekannt aus DE-OS 3 441 154, 2 905 666, 2 804 216, 4 011 353 und 3 218 200. Diese Polyester sind aufgrund ihres Polyalkylenglykolgehaltes wasseremulgierbar, wie auch in diesen Patentschriften aufgeführt wird. Besonders bevorzugte Emulgatorpolyester setzen sich zusammen aus den vorher näher bezeichneten Dicarbonsäuren bzw. deren Anhydride und mehrwertigen Polyolen. Eingesetzt werden können beispielsweise Malonsäure, Bernsteinsäure, Glutarsäure, Adipinsäure, Sebacinsäure, Hexahydrophthalsäure, Terephthalsäure, Maleinsäure, Chlormaleinsäure, Fumarsäure, Citraconsäure, Itaconsäure oder die Anhydride der genannten Dicarbonsäuren, sofern sie herstellbar sind.

Geeignete mehrwertige Alkohole sind Ethylenglykol, Propan-1,2-diol, Propan-1,3-diol, Diethylenglykol, Dipropylenglykol, Butan-1,3-diol, Butan-1,4-diol, Neopentylglykol, Hexan-1,6-diol, bis-alkoxyliertes Bisphenol A, Perhydrobisphenol A, Cyclohexan-1,4-dimethanol, Glycerin, Trimethylolpropan, Trimethylolethan, Pentaerythritsorbit, Di-trimethylolpropan und Di-pentaerythrit.

Zusätzlich enthalten die Polyester mindestens einen mehrwertigen Polyetheralkohol, beispielsweise Polyethylenglykole oder Polypropylenglykole und allyletherfunktionelle Alkohole. Geeignete allyletherfunktionelle Alkohole sind Allyl-, Methallyl-, Ethallylether, wie oxethylierter oder oxpropylierter Allyl-, Methallyl-, Ethallylalkohol, Glycerin-mono- oder -diallylether, Trimethylolpropan-mono- oder -diallylether, Pentaerythrit-mono-, di- oder triallylether und Buten-2,3-diol-1,4-mono-allylether. Zusätzlich können noch einwertige Alkohole, wie Methanol, Ethanol, Butanol, Pentanol, Heptanol, Benzylalkohol, alle Hexanole, Octanole und Decanole, einzeln oder in Gemischen eingesetzt werden.

Die Herstellung erfolgt nach bekannten Methoden, z.B. durch Schmelz- oder Azeotropveresterung der Alkohole und Säuren oder deren Anhydride (vergl. Methoden der Organischen Chemie, Houben-Weyl, 4. Auflage, Band 1412, Georg-Thieme-Verlag, Stuttgart, 1961). Bevorzugt ist die Schmelzpolykondensation unter Inertgasatmosphäre.

Zum Erhalt der erfindungsgemäßen Lackbindemittel werden die (meth)acryloylgruppenhaltigen Präpolymere A und die Emulgatorpolyester B bei Temperaturen unterhalb der Polykondensationstemperatur, vorzugsweise bei 30 bis 120°C, insbesondere zwischen 60 und 80°C, innig miteinander vermischt und anschließend mit der Polyisocyanatkomponente C umgesetzt. Für die Umsetzung muß weder die Mischung noch das Polyisocyanat in verdünnter Form vorliegen. Die Vernetzung erfolgt mit aromatischen, araliphatischen, aliphatischen oder cycloaliphatischen Polyisocyanaten. Es können auch Gemische dieser Polyisocyanate eingesetzt werden. Beispiele für geeignete Polyisocyanate sind: Ethylendiisocyanat, Trimethylendiisocyanat, Tetramethylendiisocyanat, Pentamethylendiisocyanat, Hexamethylendiisocyanat, 2-Methylpentamethylendiisocyanat, Dodecamethylendiisocyanat, Ethylethylendiisocyanat, 2,3-Dimethylethylendiisocyanat, 1-Methyltrimethylendiisocyanat, 1,3-Cyclopentylendiisocyanat, 1,4-Cyclohexylendiioocyanat, 1,3-Cyclohexylendiioocyanat, 1,3-Phenylendiisocyanat, 1,4-Phenylendiisocyanat, 2,4-Toluylendiisocyanat, 2,6-Toluylendiisocyanat, 1,5-Naphthylendiisocyanat, 1,4-Naphthylendiisocyanat, 4,4'-Diisocyanatodiphenylether, 2,3-Bis-(8-isocyanatooctyl)-4-octyl-5-hexylcyclohexen, Isophorondiisocyanat, Diphenylmethan-2,4- undloder 4,4'-diisocyanat, Cyclobutan-1,3-diisocyanat, 2,6-Hexahydrotoluylendiisocyanat, 2,4-Hexahydrotoluylendiisocyanat, Hexahydro-1,3- undloder 1,4-phenyldiisocyanat, Triphenylmethan-4,4',4''-triisocyanat, Trimethylhexandiisocyanat, Dicyclohexylmethan-4,4'- und/ oder -2,4- und/oder -2,2 -diisocyanat und ihre mono- und dimethylsubstituierten Derivate sowie Triisocyanate, Polyisocyanate, die durch Trimerisation oder Oligomerisation von Diisocyanaten oder durch Reaktion von Diisocyanaten mit Polyfunktionellen OH- oder NH-gruppenhaltigen Verbindungen entstehen. Hierzu gehören beispielsweise das Biuret von Hexamethylendiisocyanat und Wasser, das Isocyanurat des Hexamethylendiisocyanates und das Addukt von Isophorondiisocyant an Trimethylolpropan. Weiterhin geeignet sind blockierte, reversibel verkappte Polykis-isocyanate. Dazu gehören z.B. 1,3,5-Tris-[6-(1-methyl-propyliden-aminoxycarbonylamino)-hexyl]-2,4,6-trioxo-hexahydro-1,3,5-triazin und 1,4-Bis-2-oxo-1,3,4-dioxazol-5-yl)-butan. Besonders bevorzugt ist das Hexamethylendiisocyanat.

Zur Umsetzung können auch bekannte, die Isocyanat-Additionsreaktion beschleunigende Katalysatoren zugesetzt werden. Geeignete Katalysatoren sind beispielsweise tertiäre Amine, wie Triethylamin, Triethylendiamin oder Diethylenbenzylamin oder beispielsweise bekannte Zinnkatalysatoren wie Zinndioctoat oder Dibutylzinndilaurat.

Weiterhin können dem Reaktionsgemisch zur Verhinderung vorzeitiger Polymerisation Inhibitoren, wie in Methoden der Organischen Chemie, Houben-Weyl, 4. Auflage, Band 1411, S. 433, Georg-Thieme-Verlag, Stuttgart, 1961, beschrieben, zugesetzt werden. Dabei handelt es sich um Phenole, Phenolderivate, vorzugsweise sterisch gehinderte Phenole, wie das 2,6-Di-tert.-butylphenol, Amine, Nitrosamine, Chinone, Hydrochinonmonoalkylether, Phenothiazine oder Phosphorigsäureester. Sie werden im allgemeinen in Mengen von 0,001 bis 3,0 Gew.-% eingesetzt. Sehr gut geeignet ist z.B. Toluhydrochinon.

Die erfindungsgemäßen Umsetzungsprodukte sind selbstemulgierbar. Zur Herstellung der erfindungsgemäßen Ölin-Wasser-Emulsionen wird Wasser portionsweise mittels einfacher Rührvorrichtungen, Dispergatoren oder Dissolver in das Lackbindemittel eingerührt.

Die Lackbindemittel zeichnen sich im ausgehärteten Zustand durch guten Verlauf, Kratzfestigkeit, Haftung und Härte aus. Zur Erzielung besonderer technischer Effekte können den beschriebenen Lackbindemitteln Füllstoffe, Pigmente, Farbstoffe, Thixotropiermittel, Glättmittel, Mattierungsmittel, Verlaufsmittel usw. in den üblichen Mengen zugesetzt werden. Die Lackbindemittel sind nicht nur wasseremulgierbar, sondern auch in organischen Lösungsmitteln löslich. Es besteht auch die Möglichkeit, die erfindungsgemäßen Lackbindemittel mit Reaktivverdünnern oder anderen hochmolekularen Lackbindemitteln, wie z.B. Nitrocellulose, Polyacrylatharzen, Alkydharzen, ungesättigten Polyestern und/oder weiteren strahlenhärtbaren Komponenten zu kombinieren.

Geeignete Applikationsformen für die erfindungsgemäßen Emulsionen sind Spritzen, Walzen, Rakeln, Gießen, Streichen und Tauchen. Nach Verdunstung des Wassers lassen sich die beschriebenen Bindemittel durch Polymerisation härten. Die Härtung kann thermisch und/oder durch Zugabe von Polymerisationsinitiatoren (z.B. Radikalbildnern) erfolgen. Geeignet ist auch energiereiche Strahlung, wie UV-, Elektronen-, Röntgen- oder Gammastrahlung, wobei zusätzlich Photoinitiatoren anwesend sein können. Besonders bevorzugt ist die UV-Härtung in Gegenwart von Photoinitiatoren.

Als Photoinitiatoren können die für die Strahlenhärtung bekannten Verbindungen eingesetzt werden, wie z.B. aromatische Ketonverbindungen, Benzophenone, Alkylbenzophenone, halogenmethylierte Benzophenone, Michlers-Keton, Antron und halogenierte Benzophenone. Weiter geeignet sind 2,4,6-Trimethylbenzoyl-diphenylphosphinoxid, Phenylglyoxylsäureester, Antrachinon und seine zahlreichen Derivate, besonders Benzoin und seine Derivate, ferner Benzylketale und Hydroxyalkylphenone. Gemische dieser Verbindungen können ebenfalls eingesetzt werden.

Die Härtung kann aber auch mit polymerisationsauslösenden Radikalbildnern erfolgen. Bevorzugt werden wasserlösliche Peroxide, wie Wasserstoffperoxid und Acetylacetonperoxid. Weiterhin eignen sich Methylethylketonhydroperoxid, Cyclohexanonperoxid oder die wäßrigen Emulsionen der nicht wasserlöslichen Initiatoren. Diese Radikalbildner können bekannterweise mit Beschleunigern, wie z.B. den Schwermetallsalzen von Carbonsäuren, den Chelaten dieser Metalle wie den Acetaten, Naphthenaten und Acetylacetonaten von Kobalt, Mangan oder Vanadium kombiniert werden. Auch die Beschleuniger können entweder, falls sie wasserlöslich sind, in Form ihrer wäßrigen Lösungen, anderenfalls als wäßrige Emulsionen zugesetzt werden.

Nach der Härtung erhält man Überzüge, die sich durch guten Verlauf, Kratzfestigkeit, Haftung und Härte auszeichnen. Als Substrate kommen in Frage: Holz oder holzähnliche Untergründe, Kunststoffe und Metalle, besonders bevorzugt sind Holz und holzähnliche Untergründe.

### Beispiele

### Acrylatpräpolymer A

Als (meth)acryloylgruppenhaltige Prapolymere A wurden drei ungesättigte Acrylatharze der BASF AG eingesetzt. Es handelt sich um zwei Polyesteracrylate [Laromer LR 8799 (A 1) und Laromer LR 8800 (A 2)] und um ein Polyetheracrylat [Laromer LR 8812 (A 3)].

### Emulgatorpolyester B

Als Emulgatorpolyester verwendet wurden der Polyester B 1 auf Basis von

| | |
|---|---|
| 35,3 Gew.-% | Trimethylolpropandiallylether, |
| 27,5 Gew.-% | Maleinsäureanhydrid, |
| 12,2 Gew.-% | Benzylalkohol, |
| 11,8 Gew.-% | Polyethylenglykol 1 500, |
| 11,7 Gew.-% | Propan-1,2-diol, |
| 1,5 Gew.-% | Trimethylolpropan |

und der Polyester B 2 auf Basis von

| | |
|---|---|
| 33,7 Gew.-% | Trimethylolpropandiallylether, |
| 26,2 Gew.-% | Maleinsäureanhydrid, |
| 11,5 Gew.-% | Benzylalkohol, |
| 11,2 Gew.-% | Polyethylenglykol 1 500, |
| 10,2 Gew.-% | Propan-1,2-diol, |
| 7,2 Gew.-% | Trimethylolpropan. |

Die Emulgatorpolyester B 1 und B 2 wurden nach dem aus der DE-OS 4 011 349 bekannten Verfahren (Schmelzpolykondensation) hergestellt. Die Säurezahlen lagen bei 18 bis 20 mg KOH/g Polymer.

### Herstellung der erfindungsgemäßen Lackbindemittel

Zur Herstellung der erfindungsgemäßen Lackbindemittel wurden zunächst die in den Tabellen 1 und 2 angegebenen Präpolymere, bestehend aus Acrylatpräpolymer A und Emulgatorpolyester B innig miteinander vermischt. Anschließend wurde die Mischung auf 70°C aufgeheizt und mit verschiedenen Polyisocyanaten C und unterschiedlichen Polyisocyanatkonzentrationen so lange umgesetzt, bis kein Isocyanat IR-spektroskopisch (Isocyanatbande bei 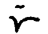 = 2 270 cm⁻¹) mehr nachzuweisen war.

### Herstellung der erfindungsgemäßen Emulsionen

Die erfindungsgemäßen Emulsionen wurden mit einem Superdispax SD 41 der Fa. IKA hergestellt. Der Festkörpergehalt betrug 50 %.

### Prüfung der Lackbindemittel

Den Emulsionen wurden jeweils 1,5 Gew.-% des Photoinitiators 2-Hydroxy-2-methyl-1-phenyl-propan-1-on zugesetzt und vermischt. Anschließend wurden die Proben auf Glasplatten in einer Schichtdicke von 90 µ aufgerakelt, getrocknet und mit UV-Licht bestrahlt (80 W/cm, 3 m/min/ Lampe). Die angegebenen Pendelhärten wurden nach König (DIN 53 157) 30 min nach der UV-Härtung bestimmt.

In gleicher Weise wurden die Bindemittel auf Holzplatten aufgetragen, jedoch in einer Schichtdicke von 120 µ. Nach der Trocknung und Härtung wurde die Qualität der erfindungsgemäßen Lacke beurteilt. Die Filme zeichnen sich durch sehr guten Verlauf und geringes Eindringen in Holz aus. Sie sind transparent, elastisch und sehr kratzfest. Die Oberflächen sind kraterfrei. Es ist auch kein Absacken im Porenbereich feststellbar.

### Überprüfung der Recyclefähigkeit

Zur Überprüfung der Recyclefähigkeit wurde eine Emulsion aus Beispiel 1 mit einem Walzenaggregat auf unterschiedlichen Substraten aufgetragen und die überschüssige Emulsion so lange auf dem Walzenaggregat belassen, bis das Wasser verdunstet war. Das eingetrocknete Bindemittel ließ sich mit Wasser von den Auftragswalzen abtrennen. Dieses Bindemittel/Wasser-Gemisch -Gemisch wurde mit einem Dispax SD 41 emulgiert und die Qualität der Emulsion mittels eines Mastersizers MS 20 der Firma Malvern Instruments bewertet. Der Durchmesser der Teilchen lag unter 5 µ; eingetrocknetes Bindemittel kann also recyclet werden.

### Vergleichsbeispiele

Für Vergleichsbeispiel V 1 wurde nur der Emulgatorpolyester B 1 mit Hexamethylendiisocyanat umgesetzt und emulgiert. Nach der Härtung unter identischen Bedingungen wie bei den erfindungsgemäßen Beispielen wird ein nicht klebfreier Film erhalten. Bindemittel der beschriebenen Art härten demnach weit langsamer aus als die erfindungsgemäßen Produkte.

Als Vergleichsbeispiel V 2 wurde eine Mischung aus Acrylatpräpolymer A 1 und Emulgatorpolyester B 1 hergestellt. Im Gegensatz zu den erfindungsgemäßen Bindemitteln wurde die Mischung nicht mit Polyisocyanat umgesetzt, sondern sofort emulgiert. Die Abprüfung erfolgte unter identischen Bedingungen wie bei den erfindungsgemäßen Beispielen. Im Vergleich zu den Pendelhärten der erfindungsgemäßen Beispiele 1 und 7 ist die Pendelhärte von Vergleichsbeispiel 1 deutlich geringer, d.h. die erfindungsgemäßen Lackbindemittel härten schneller aus. Die Überprüfung der Recyclefähigkeit ergab, daß reemulgiertes Produkte gemäß Vergleichsbeispiel V 2 Teilchen größer 12 µ enthält und daher nicht recyclefähig ist. Weiterhin konnte ein tieferes Eindringen in Holz beobachtet werden, Sehr drastisch war der Unterschied der Lagerstabilität der Emulsionen. Während die erfindungsgemäßen Emulsionen über Monate hinweg bei 20°C lagerstabil sind, ist die Emulsion von Vergleichsbeispiel V 2 bereits nach einer Woche koaguliert, d.h. das Produkt kann nicht mehr appliziert werden.

Im Vergleichsbeispiel V 3 schließlich wird nur das Polyesteracrylat A 1 mit Hexamethylendiisocyanat umgesetzt. Das Umsetzungsprodukt ist nicht wasseremulgierbar und kann nicht mit den erfindungsgemäßen Bindemitteln verglichen werden.

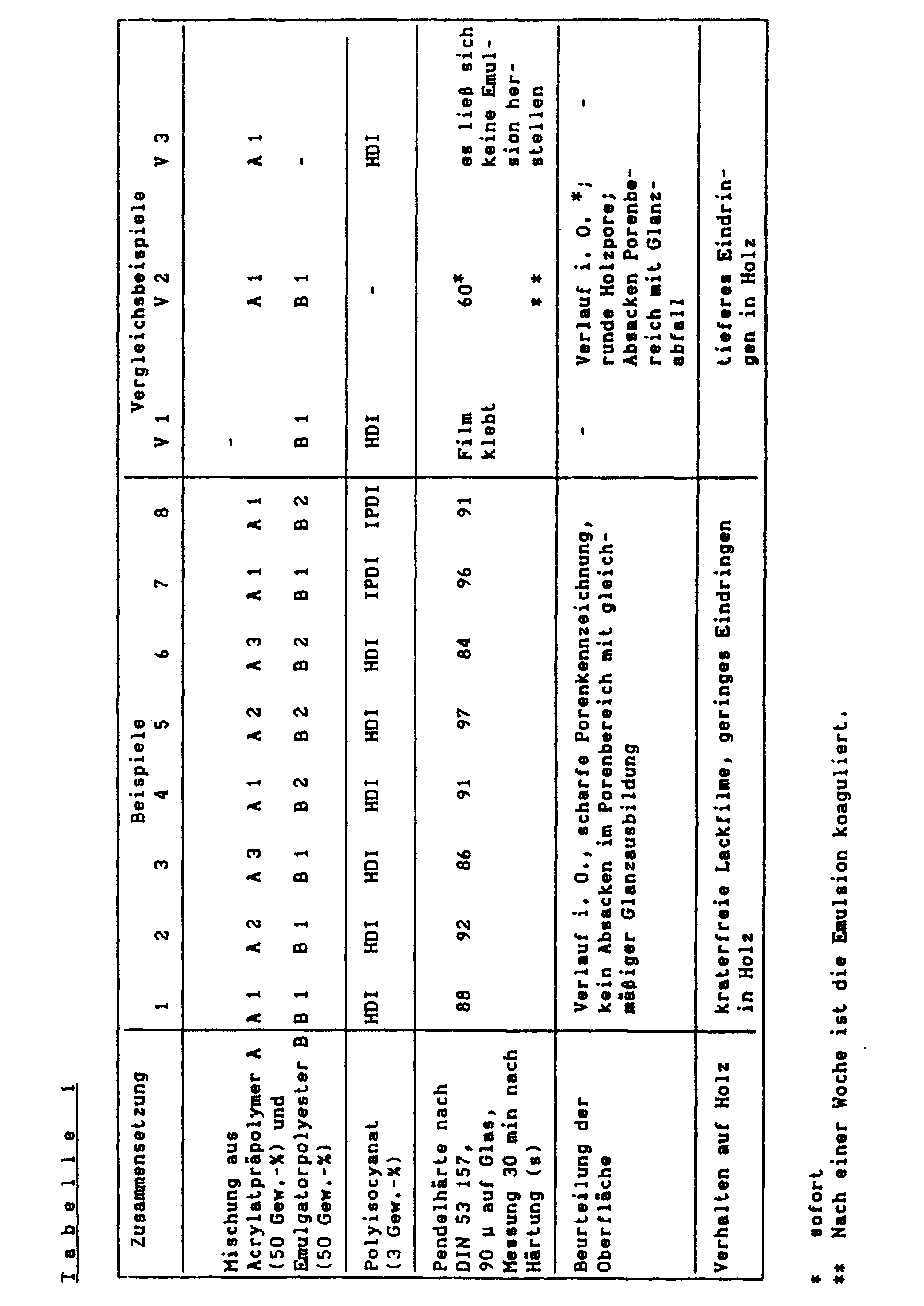

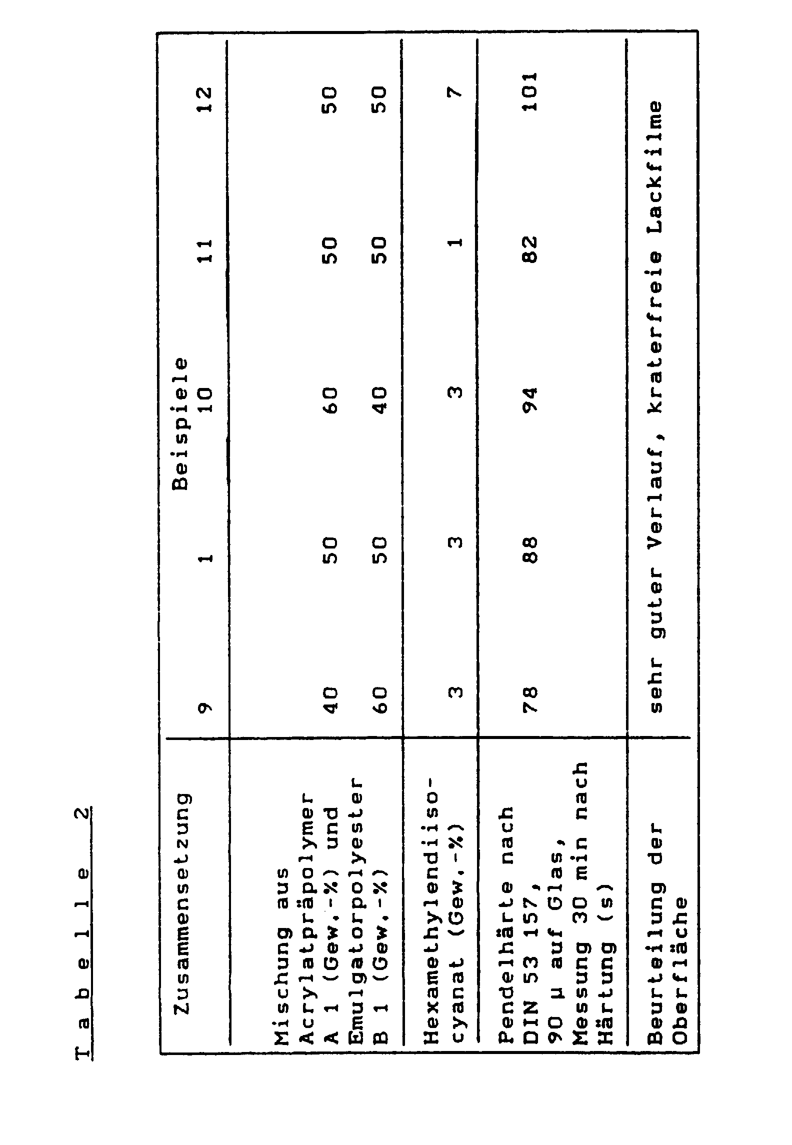

## Patentansprüche

1. Selbstemulgierbare, polymerisierbare Bindemittel, hergestellt durch Umsetzung einer vorab hergestellten Mischung eines oder gegebenenfalls mehrerer (meth)acryloylgruppenhaltiger Präpolymerer A und eines oder gegebenenfalls mehrerer ungesättigter, wasseremulgierbarer Polyester B mit einem oder gegebenenfalls mehreren Polyisocyanaten C.

2. Lackbindemittel nach Anspruch 1, dadurch gekennzeichnet, daß es sich bei den (meth)-acryloylgruppenhaltigen Präpolymeren A um (meth)acryloylgruppenhaltige Polyester, Polyurethane, Polyetherpolyester und Polyesterurethane handelt.

3. Lackbindemittel nach den vorhergehenden Ansprüchen, dadurch gekennzeichnet, daß der wasseremulgierbare, polymerisierbare Polyester B mindestens eine Allylethergruppe enthält.

4. Lackbindemittel nach Anspruch 3, dadurch gekennzeichnet, daß der Polyester eine Trimethylolpropandiallylether-Gruppe enthält.

5. Lackbindemittel nach den vorhergehenden Ansprüchen, dadurch gekennzeichnet, daß die Mischungen aus dem (meth)acrylolgruppenhaltigen Präpolymeren A und den wasseremulgierbaren Polyestern B mit Polyisocyanaten C umgesetzt werden.

6. Lackbindemittel nach den vorhergehenden Ansprüchen, dadurch gekennzeichnet, daß es erhältlich ist durch Umsetzung von
20 - 80 Gew.-% einem oder mehreren (meth)acryloylgruppenhaltigen Präpolymeren A
80 - 20 Gew.-% einem oder mehreren ungesättigten, wasseremulgierbaren Polyestern B mit
0,1 - 20 Gew.-% einem oder mehreren Polyisocyanaten C,
wobei die Summe der Prozentgehalte aus A, B und C 100 ist.

7. Lackbindemittel nach den vorhergehenden Ansprüchen, dadurch gekennzeichnet, daß
A 35 - 65 Gew.-%,
B 65 - 35 Gew.-% und
C 0,2 - 10 Gew.-% beträgt,
wobei die Summe der Prozentgehalte aus A, B und C 100 ist.

8. Verwendung von Lackbindemitteln nach den vorhergehenden Ansprüchen zur Herstellung von Emulsionen.

9. Verwendung von Lackbindemitteln nach den Ansprüchen 1 - 7 als Lackrohstofl.

## Claims

1. A self-emulsifying, polymerisable binder vehicle, produced by the reaction of a previously prepared mixture, comprising one or optionally a plurality of prepolymers A which contain (meth)acryloyl groups and one or optionally a plurality of unsaturated, water-emulsifiable polyesters B, with one or optionally a plurality of polyisocyanates C.

2. A lacquer binder vehicle according to claim 1, characterised in that the prepolymers A which contain (meth)acryloyl groups are polyesters, polyurethanes, polyether polyesters and polyester-urethanes which contain (meth)acryloyl groups.

3. A lacquer binder vehicle according to any of the preceding claims, characterised in that the water-emulsifiable, polymerisable polyester B contains at least one allyl ether group.

4. A lacquer binder vehicle according to claim 3, characterised in that the polyester contains a trimethylolpropane diallyl ether group.

5. A lacquer binder vehicle according to any of the preceding claims, characterised in that the mixtures, comprising the prepolymer A which contains (meth)acryloyl groups and the water-emulsifiable polyesters B, are reacted with polyisocyanates C.

6. A lacquer binder vehicle according to any of the preceding claims, characterised in that it is obtainable by the reaction of
20 - 80 % by weight of one or more prepolymers A which contain (meth)acryloyl groups and
80 - 20 % by weight of one or more unsaturated, water-emulsifiable polyesters B with
0.1 - 20 % by weight of one or more polyisocyanates C,
wherein the sum of the percentage contents of A, B and C is 100.

7. A lacquer binder vehicle according to any of the preceding claims, characterised in that
A is 35 - 65 % by weight,
B is 65 - 35 % by weight, and
C is 0.2 - 10 % by weight,
wherein the sum of the percentage contents of A, B and C is 100.

8. The use of lacquer binder vehicles according to any of the preceding claims for the production of emulsions.

9. The use of lacquer binder vehicles according to any of claims 1 - 7 as a lacquer raw material.

## Revendications

1. Liants polymérisables auto-émulsionnables, préparés par réaction d'un mélange préparé à l'avance d'un ou, le cas échéant, de plusieurs prépolymères A portant des groupes (méth)acryloyle et d'un ou, le cas échéant, de plusieurs polyesters B non saturés, émulsifiables dans l'eau, avec un ou, le cas échéant, plusieurs polyisocyanates C.

2. Liants pour laques suivant la revendication 1, caractérisés en ce que les prépolymères A porteurs de groupes (méth)acryloyle consistent en polyesters, polyuréthannes, polyéther-polyesters et polyester-uréthannes portant des groupes (méth)acryloyle.

3. Liants pour laques suivant les revendications précédentes, caractérisés en ce que le polyester B polymérisable, émulsifiable dans l'eau porte au moins un groupe éther d'allyle.

4. Liants pour laques suivant la revendication 3, caractérisés en ce que le polyester contient un groupe éther de diallyle de triméthylolpropane.

5. Liants pour laques suivant les revendications précédentes, caractérisés en ce que les mélanges du pré-polymère A portant des groupes (méth)acryloyle et des polyesters B émulsifiables dans l'eau sont amenés à réagir avec des polyisocyanates C.

6. Liant pour laques suivant les revendications précédentes, caractérisé en ce qu'on l'obtient par réaction de
20 à 80 % en poids d'un ou plusieurs prépolymères A portant des groupes (méth)acryloyle
80 à 20 % en poids d'un ou plusieurs polyesters B insaturés émulsifiables avec l'eau, avec
0,1 à 20 % en poids d'un ou plusieurs polyisocyanates C,
la somme des pourcentages de A, B et C étant égale à 100.

7. Liant pour laques suivant les revendications précédentes, caractérisé en ce que
A représente 35 à 65 % en poids
B représente 65 à 35 % en poids et
C représente 0,2 à 10 % en poids,
la somme des pourcentages de A, B et C étant égale à 100.

8. Utilisation de liants pour laques suivant les revendications précédentes pour la préparation d'émulsions.

9. Utilisation de liants pour laques suivant les revendications 1 à 7 comme matière première pour laques.
